# FASCICULE DE BREVET EUROPEEN

(11) **EP 0 429 851 B1**
(45) Date de publication et mention de la délivrance du brevet: **19.01.1994**
(21) Numéro de dépôt: 90120351.3
(22) Date de dépôt: 24.10.1990
(51) Int. Cl.: A63C 5/12, C08J 5/12, B23B 7/12

(54) **Procédé de réalisation d'un ski par collage, et structure de ski obtenue par ce procédé**
Verfahren zur Herstellung eines Skis durch Verkleben, und Skistruktur erstellt nach diesem Verfahren
Process for preparing a ski by sticking, and ski structure obtained by this process

(30) Priorité: 22.11.1989 FR 8915662
(43) Date de publication de la demande: 05.06.1991
(73) Titulaire: SALOMON S.A., 74370 Pringy (FR)
(72) Inventeur: Nurit, Jean-Pierre, F-74000 Annecy (FR); Recher, Gilles, F-74000 Annecy (FR)

(56) Documents cités:
- EP-A- 0 145 000
- WO-A-81/00257
- AT-A- 382 083
- FR-A- 2 432 934
- FR-A- 2 627 700
- US-A- 3 635 483
- US-A- 4 412 687

## Description

La présente invention concerne la fabrication des skis utilisés en sports d'hiver, et destinés à glisser sur la neige et la glace.

Les skis actuels ont généralement une structure composite dans laquelle sont combinés différents matériaux de manière que chacun d'eux intervienne de façon optimale, compte tenu de la distribution des contraintes mécaniques. Ainsi, la structure comprend généralement des éléments de protection périphériques, formant la face supérieure et les faces latérales du ski, des éléments internes de résistance ou lames de résistance, constitués en un matériau ayant une grand résistance et une grande raideur. La structure comprend également des éléments de remplissage tels qu'un noyau en structure alvéolaire, et une semelle de glissement formant la face inférieure du ski et assurant un bon glissement sur la neige.

Pour obtenir les caractéristiques physiques appropriées, la fabrication des skis modernes fait donc appel à des matériaux très divers : les semelles de glisse sont généralement en polyéthylène ; les noyaux alvéolaires sont en bois ou en mousse synthétique ; les carres disposés sur les arêtes inférieures du ski sont en acier ; des renforts sont souvent prévus en alliage d'aluminium ou en résines armées de fibres ; les surfaces supérieures du ski sont réalisées en feuille thermoplastique.

Le caractère composite d'une telle structure de ski conduit à réaliser le ski par assemblage de plusieurs éléments préalablement enduits ou imprégnés d'une colle. Naturellement, la colle doit être compatible avec tous les éléments à assembler. Pour ces raisons, on utilise généralement une colle à base de résine époxyde, qui présente une bonne aptitude à mouiller les substrats face à face et à adhérer sur lesdits substrats. Après durcissement, la colle forme une couche de jonction, réunissant les substrats. Cette technique de collage d'éléments de nature différente est décrite par exemple dans le document US 4,412,687.

La colle époxyde est toutefois onéreuse, et la manipulation des colles à résine époxyde présente des inconvénients.

Par rapport aux résines époxydes utilisées actuellement comme colles dans la fabrication industrielle des skis, les résines polyester ou vinylester présentent des avantages notables en terme de coût de matières premières, de rapidité de réticulation, de facilité de stockage si l'on utilise des renforts préimprégnés.

La difficulté est que les résines polyester ou vinylester ne permettent pas une adhérence sur tous les substrats habituels des skis, et leur adhérence est limitée à seulement quelques substrats particuliers.

Un moyen de provoquer l'adhésion d'une colle polyester ou vinylester avec les autres matériaux formant les substrats consiste à utiliser des primaires spécifiques, c'est-à-dire des éléments qui sont appliqués sur les substrats à coller sous forme de solution liquide dans un solvant. La technique des primaires présente toutefois des inconvénients, car elle entraîne des risques d'agression et de fissuration des substrats par le solvant du primaire. Ledit solvant doit en outre s'échapper lors de l'application du primaire, ce qui créé des nuisances. L'application des primaires requiert une grande attention pour obtenir une régularité suffisante de dépose. La durée d'utilisation de telles surfaces enduites d'un primaire est également limitée.

La demande FR 2 627 700 décrit un procédé de fabrication de ski qui consiste à assembler des sous-ensembles entre eux après avoir préalablement solidarisé sur chaque face d'assemblage une mince couche de matériau thermoplastique. L'assemblage est ensuite effectué par éohauffement et soudure des couches minces entre elles.

La présente invention a pour objet d'éviter les inconvénients des procédés connus, en proposant un nouveau procédé de fabrication et une nouvelle structure de ski permettant le collage par des colles polyester ou vinylester, sans recourir à l'application de primaires sous forme liquide en solution dans des solvants.

Le procédé de l'invention est ainsi nettement moins onéreux, et sa mise en oeuvre est simple, rapide, et ne donne lieu à aucune nuisance.

Pour atteindre ces objets ainsi que d'autres, le procédé de fabrication selon l'invention comprend une étage d'assemblage d'au moins un premier et un second éléments par action d'une couche de colle polyester ou vinylester entre les surfaces de jonction desdits éléments ; selon le procédé, on interpose, entre ladite couche de colle et la surface de jonction dudit premier élément, un film à l'état solide, comportant au moins une couche à base de polymères de préférence thermoplastique permettant l'adhésion de la colle sur l'ensemble constitué par le premier élément et le film dont l'assemblage peut être assuré notamment par une liaison chimique ou physico-chimique ou par interdiffusion des chaînes de polymères, par ancrage mécanique, par soudure.

Selon un mode de réalisation, le film comporte :
- une face de collage en une matière telle que la colle présente un bon pouvoir adhésif sur le film,
- une face d'assemblage en une matière permettant sa solidarisation avec la surface de jonction du premier élément.

L'assemblage entre le film et le second élément s'effectue par l'intermédiaire d'une colle polyester ou vinylester : une première réalisation consiste à enduire la surface de jonction du second élément avec ladite colle polyester ou vinylester ; une seconde réalisation, applicable lorsque le second élément est à base de résine polyester, consiste à prévoir une surface de jonction du second élément en une résine polyester non entièrement réticulée, de sorte que ladite résine du second élément assure elle-même la fonction de collage avec le film par complément de réticulation de ladite résine.

Le ski selon l'invention est défini dans la revendication 16.

D'autres objets, caractéristiques et avantages de la présente invention ressortiront de la description suivante de modes de réalisation particuliers, faite en relation avec les figures jointes, parmi lesquelles :
- les figures 1 à 4 illustrent un procédé d'assemblage par collage selon un premier mode de réalisation de l'invention ;
- les figures 5 et 6 illustrent un procédé d'assemblage par collage selon un second mode de réalisation de l'invention ; et
- la figure 7 illustre un procédé d'assemblage par collage selon un troisième mode de réalisation de l'invention.

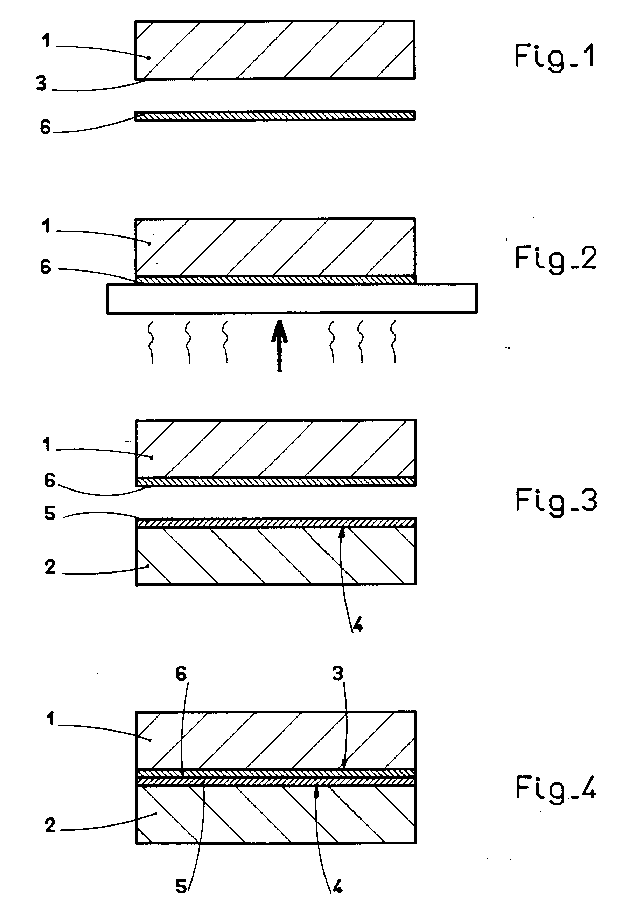

Dans le mode de réalisation représenté sur les figures 1 à 4, le procédé de l'invention permet l'assemblage d'un premier élément 1 et d'un second élément 2, selon leurs surfaces de jonction respectives 3 et 4, au moyen d'une couche de colle 5 polyester ou vinylester interposée entre lesdites surfaces de jonction 3 et 4. Le second élément 2 est supposé compatible avec la colle 5, c'est-à-dire que la colle 5 polyester ou vinylester présente un bon pouvoir d'adhésion sur le second élément 2. Par contre, le premier élément 1 est en une matière pouvant ne pas présenter une bonne compatibilité avec la colle 5, c'est-à-dire que la colle 5 ne présente pas un bon pouvoir d'adhésion sur la surface de jonction 3 du premier élément 1.

Le procédé de l'invention consiste à utiliser un film compatible dit "compatibilisant", monocouche ou multicouche, afin de permettre une bonne adhésion de la colle 5 par rapport au premier élément 1. Pour cela, selon l'invention, on interpose, entre ladite couche de colle 5 et la surface de jonction 3 du premier élément 1, un film 6 à l'état solide, comportant au moins une couche à base de polymères présentant la propriété de faire adhérer la colle 5 sur l'ensemble constitué par le premier élément 1 et le film 6. Le polymère utilisé est préférentiellement choisi parmi les matériaux thermoplastiques.

Le film 6 doit comporter une face de collage, ou face orientée vers la colle 5, en une matière telle que la colle 5 présente un bon pouvoir adhésif sur le film 6. Le film doit en outre comporter une face d'assemblage, ou face orientée vers la surface de jonction 3 du premier élément 1, en une matière permettant sa solidarisation avec ladite surface de jonction 3 du premier élément 1.

En ce qui concerne la liaison film 6 - premier élément 1, la solidarisation entre le film 6 et le premier élément 1 peut être assurée par une liaison chimique, ou par ancrage mécanique, ou par soudure.

En ce qui concerne la présence de la colle 5, une première possibilité, représentée sur les figures 1 à 4, consiste à enduire la surface de jonction 4 du second élément 2 d'une colle polyester ou vinylester 5, comme le représente la figure 3, avant assemblage par pressage de la couche de colle 5 contre le film 6 et obtention de l'ensemble représenté sur la figure 4.

Une seconde façon d'assurer la solidarisation entre le film et le second élément 2 peut être prévue dans la cas où le second élément 2 comporte une surface de jonction 4 à base de résine polyester non entièrement réticulée. On peut alors appliquer la surface de jonction 4 du second élément 2 directement contre le film 6, et, par chauffage, la résine non entièrement réticulée du second élément 2 assure elle-même la fonction de collage, I'adhésion étant obtenue par complément de réticulation de ladite résine.

Dans tous les cas, un film 6 très mince peut être utilisé, de quelques microns à quelques dixièmes de millimètre : une épaisseur de quelques microns peut suffire.

Pour réaliser le film 6, on utilise en général des polymères thermoplastiques et de préférence des polyéthylènes basse densité linéaire comme support d'un polymère greffé.

Une première possibilité consiste à utiliser un film 6 en polyéthylène greffé par action d'anhydride maléique. Ce film peut avantageusement être utilisé pour promouvoir l'adhésion sur certains substrats dont la surface de jonction est constituée d'un matériau non directement collable par une colle polyester ou vinylester : le premier élément peut notamment être en polyamide, en polyéthylène non traité, en polyéthylène téréphtalate (PET), en polybutadiène téréphtalate (PBT), en polypropylène, en alliage d'aluminium ou en aluminium traité. Dans tous les cas, le film en polyéthylène greffé peut être solidarisé à ce premier élément par plaquage à chaud ou calandrage.

A titre d'exemple, la réaction entre les groupements terminaux de la chaîne polyester de la colle et l'anhydride maléique du film conduit à l'ouverture du cycle maléique greffé et à la formation d'un ester qui lie chimiquement les deux constituants et procure une très bonne adhésion.

Cette réaction est activée thermiquement par l'exothermie de la réaction de réticulation de la résine polyester, et peut -donc s'obtenir même avec des températures de moulage faibles.

L'adhésion sur les semelles polyéthylène grattées et flammées est obtenue à l'aide d'un tel film dit "compatibilisant" 6 de type polyéthylène greffé à l'acide maléique, le film 6 étant fixé sur la semelle par pressage à chaud, de manière à provoquer une interdiffusion des chaînes polyéthylène entre le polyéthylène de la semelle et celui du support du film greffé.

A titre d'exemple, l'utilisation d'un film compatibilisant thermoplastique 6 en polyéthylène greffé à l'anhydride maléique permet le collage d'un premier élément 1 en polyamide par une colle 5 en résine polyester ou vinylester. Selon l'invention, on provoque l'adhésion du film 6 sur le premier élément 1 par réaction chimique entre les groupements anhydride maléique greffés à la surface du polyéthylène et les groupements terminaux du polyamide. Ces groupements existent en faible concentration dans le matériau, mais présentent la particularité de migrer à l'extrême surface lors de l'extrusion de la feuille de polyamide et sont donc disponibles pour la réaction. La réaction conduit à la substitution de l'atome d'oxygène du cycle maléique par l'atome d'azote du groupement terminal amine du polyamide et formation d'une molécule d'eau. Il est nécessaire de porter les substrats à des températures supérieures à 115° C pour déclencher la réaction. On peut donc plaquer à chaud, par calandrage ou pressage, le film 6 contre le premier élément 1 pour assurer leur solidarisation l'un à l'autre.

De manière similaire, on peut utiliser un film 6 en polyéthylène ou en copolymère d'éthylène et d'acétate de vinyle greffé par l'acide carboxylique, l'ester d'acide carboxylique ou son anhydre.

Une seconde possibilité consiste à utiliser un film 6 en polyuréthanne. Un tel film 6 peut être utilisé pour rendre compatible avec la colle polyester ou vinylester un premier élément 1 dont la surface de jonction est constituée de l'un des matériaux suivants non directement collables par une telle colle : polyuréthanne thermodurcissable, matériau époxy non entièrement réticulé, polyester non entièrement réticulé. Dans tous les cas, le film en polyuréthanne est plaqué à chaud par calandrage ou pressage contre le premier élément.

Un exemple est l'emploi d'un tel film compatibilisant 6 à base d'élastomère polyuréthanne thermoplastique pour la fabrication d'un ski à noyau en mousse polyuréthanne injectée.

Une troisième possibilité consiste à utiliser un film constitué d'un ionomère. Le film ionomère est plaqué à chaud par calandrage ou pressage contre un premier élément dont la surface de jonction est constituée par exemple de l'un des matériaux suivants : polyéthylène non traité, acier ou alliage d'aluminium, aluminium traité.

Un film en ABS (Acrylonitrile Butadiène Styrène) peut être utilisé, par plaquage à chaud ou calandrage sur la surface de jonction d'un premier élément en matériau époxy non entièrement réticulé, ou en polyester non entièrement réticulé.

Le film 6 peut être de type monocouche, comme le représentent les figures 1 à 4.

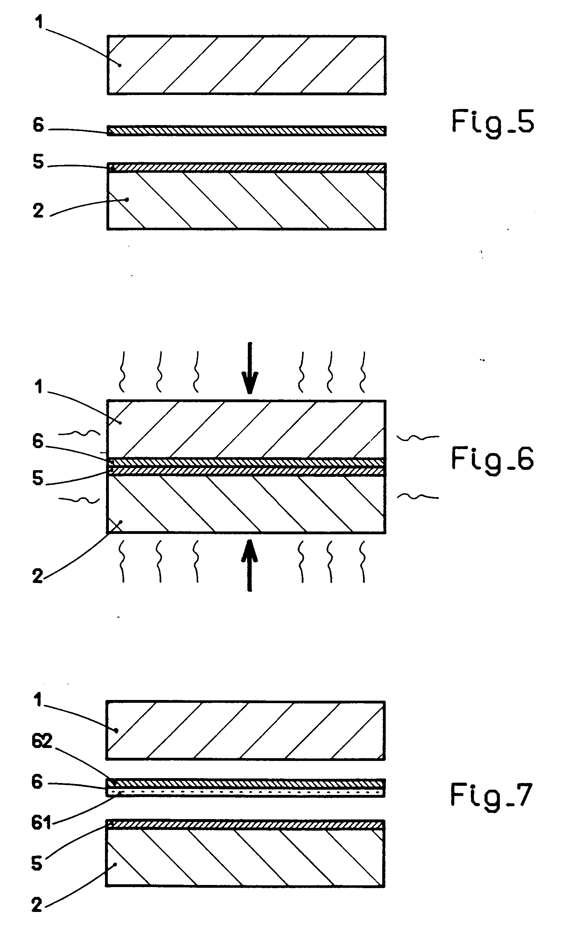

En alternative, le film 6 peut être de type multicouche, comme représenté sur la figure 7, comportant au moins une première couche 61 formant face de collage compatible avec la colle 5, et une seconde couche 62 formant face d'assemblage compatible avec le premier élément 1.

Dans le mode de réalisation représenté sur les figures 1 à 4, l'assemblage s'effectue par étapes successives : au cours d'une première étape illustrée par les figures 1 et 2 on assemble par calandrage ou pressage à chaud le film 6 dit "compatibilisant" sur la surface de jonction 3 du premier élément 1 présentant un défaut d'adhérence avec la colle polyester ou vinylester ; la température doit être élevée au niveau du point de ramollissement du film ; au cours d'une seconde étape, on applique la colle 5 polyester ou vinylester sur la surface de jonction 4 du second élément 2, comme le représente la figure 3 ; au cours d'une troisième étape, on applique l'une contre l'autre les couches constituées par la colle 5 et le film 6, réalisant l'assemblage tel que représenté sur la figure 4.

Dans le cas d'un renfort métallique, le film 6 peut avantageusement être réalisé par un procédé de poudrage électrostatique.

Dans le mode de réalisation représenté sur les figures 5 et 6, on dispose tous les éléments dans un moule, c'est-à-dire, dans l'ordre : le premier élément 1, le film 6, la couche de colle 5, le second élément 2 ; par pressage à chaud, on applique tous les éléments les uns, sur les autres, et on réalise l'assemblage en une étape. La température de l'ensemble doit également être élevée au niveau du point de ramollissement du film.

On comprendra que le procédé de l'invention permet d'obtenir un ski à structure composite, comprenant au moins un premier élément 1 et un second élément 2 solidarisés l'un à l'autre par une colle 5 polyester ou vinylester disposée entre les deux surfaces de jonction des éléments, un film dit "compatibilisant" étant disposé entre la colle et le premier élément 1, ledit film autorisant la solidarisation par collage des éléments l'un par rapport à l'autre. Dans une telle structure de ski, on constate la présence d'un film dit "compatibilisant" de polymère comprenant au moins une couche constituée de l'un des matériaux suivants : polyéthylène ou copolymère d'éthylène et d'acétate de vinyle greffé par l'acide carboxylique, l'ester d'acide carboxylique ou son anhydre, ou polyuréthanne, ou ionomère, ou ABS.

La présente invention n'est pas limitée aux modes de réalisation qui ont été explicitement décrits, mais elle en inclut les diverses variantes et généralisations contenues dans le domaine des revendications ci-après.

## Revendications

1. Procédé de fabrication d'un ski à structure composite, comprenant une étape d'assemblage d'au moins un premier (1) et un second (2) éléments par action d'une couche de colle (5) polyester ou vinylester entre les surfaces de jonction (3,4) desdits éléments, où on interpose, entre ladite couche de colle (5) et la surface de jonction (3) dudit premier élément (1) un film (6) à l'état solide, comportant au moins une couche à base de polymères permettant l'adhésion de la colle (5) sur l'ensemble constitué par l'élément (1) et le film (6) dont l'assemblage est assuré par ailleurs par une liaison chimique ou physico-chimique, ou par ancrage mécanique, ou par interdiffusion des chaînes de polymères, ou par soudure.

2. Procédé selon la revendication 1, caractérisé en ce que :
- le film (6) comporte une face de collage en une matière telle que la colle (5) présente un bon pouvoir adhésif sur le film (6),
- le film (6) comporte une face d'assemblage en une matière permettant sa solidarisation avec la surface de jonction (3) du premier élément (1).

3. Procédé selon l'une quelconque des revendications 1 ou 2, caractérisé en ce que le deuxième élément (2) comporte une surface de jonction (4) enduite d'une colle (5) polyester ou vinylester.

4. Procédé selon l'une quelconque des revendications 1 ou 2, caractérisé en ce que le deuxième élément (2) comporte une surface de jonction (4) à base de résine polyester non entièrement réticulée, de sorte que ladite résine du second élément (2) assure elle-même la fonction de collage, I'adhésion entre le second élément (2) et le film (6) étant obtenue par complément de réticulation de ladite résine du second élément (2).

5. Procédé selon l'une quelconque des revendications 1 à 4, caractérisé en ce que le film (6) comprend une couche de polymère ou de copolymère thermoplastique.

6. Procédé selon l'une quelconque des revendications 1 à 5, caractérisé en ce que le film (6) comprend une couche en polyéthylène ou copolymère d'éthylène et d'acétate de vinyle greffé par action d'acide carboxylique, ester d'acide carboxylique ou son anhydre.

7. Procédé selon la revendication 6, caractérisé en ce que le film (6) à couche de polyéthylène ou copolymère d'éthylène et d'acétate de vinyle greffé est plaqué à chaud par calandrage ou pressage contre un premier élément (1) dont la surface de jonction (3) est constituée de l'un des matériaux : polyamide, polyéthylène non traité, polyéthylène téréphtalate, polybutadiène téréphtalate, polypropylène, ou aluminium traité.

8. Procédé selon l'une quelconque des revendications 1 à 5, caractérisé en ce que le film (6) comprend une couche en polyuréthane.

9. Procédé selon la revendication 8, caractérisé en ce que le film (6) à couche de polyuréthanne est plaqué à chaud par calandrage ou pressage contre un premier élément (1) dont la surface de jonction (3) est constituée de l'un des matériaux : polyuréthanne thermodurcissable, matériau époxy non entièrement réticulé, polyester non entièrement réticulé.

10. Procédé selon l'une quelconque des revendications 1 à 5, caractérisé en ce que le film (6) comprend une couche en ionomère.

11. Procédé selon la revendication 10, caractérisé en ce que le film à couche de ionomère (6) est plaqué à chaud par calandrage ou pressage contre un premier élément (1) dont la surface de jonction (3) est constituée de l'un des matériaux : polyéthylène non traité, acier, alliage d'aluminium ou aluminium traité.

12. Procédé selon l'une quelconque des revendications 1 à 5, caractérisé en ce que le film (6) comprend une couche en ABS (Acrylonitrile Butadiène Styrène).

13. Procédé selon la revendication 12, caractérisé en ce que le film à couche en ABS (6) est plaqué à chaud par calandrage ou pressage contre un premier élément (1) dont la surface de jonction (3) est constituée de l'un des matériaux : matériau époxy non entièrement réticulé, ou polyester non entièrement réticulé.

14. Procédé selon l'une quelconque des revendications 1 à 13, caractérisé en ce que le film (6) est de type monocouche.

15. Procédé selon l'une quelconque des revendications 1 à 13, caractérisé en ce que le film (6) est de type multicouche, comportant au moins une première couche (61) formant face de collage compatible avec la colle (5) et une seconde couche (62) formant face d'assemblage compatible avec le premier élément (1).

16. Ski à structure composite obtenu par le procédé selon l'une quelconque des revendications 1 à 15, comportant au moins un premier (1) et un second (2) éléments solidarisés l'un à l'autre par une colle (5) polyester ou vinylester disposée entre les surfaces de jonction (3,4) desdits éléments, où un film de polymère (6) est disposé entre la colle (5) et le premier élément (1), ledit film (6) dont la liaison avec le premier élément (1) est assuré par une liaison chimique, ou physico-chimique, ou par ancrage mécanique, ou par interdiffusion des chaînes de polymères, ou par soudure, permet la solidarisation par collage des éléments (1,2) l'un par rapport à l'autre.

17. Ski selon la revendication 16 caractérisé en ce que le film polymère (6) est thermoplastique.

18. Ski selon la revendication 17 caractérisé en ce que le film polymère (6) comprend au moins une couche constituée de l'un des matériaux : polyéthylène greffé par l'acide carboxylique, l'ester d'acide carboxylique ou son anhydre, polyuréthanne, ionomère, ABS (Acrylonitrile Butadiène Styrène)

## Claims

1. Method for manufacturing a ski having a composite structure, comprising an assembly step of at least one (1) and a second (2) element by the action of a polyester or vinylester adhesive layer (5) between the junction surfaces (3,4) of said elements, wherein a film (6) in the solid state is inserted between said adhesive layer (5) and the junction surface (3) of said first element, comprising at least one polymer based layer enabling adhesion of the adhesive (5) on the assembly constituted by element (1) and film (6) whose assembly is ensured in addition by a chemical or physico-chemical connection or by mechanical anchoring, or by interdiffusion of polymer chains, or by welding.

2. Method as defined by claim 1, characterized in that:
- the film (6) comprises an adhesive surface made of a material such as an adhesive (5) having a good adhesive capacity on the film (6),
- film (6) comprises an assembly surface made of a material enabling its affixation to the junction surface (3) of the first element (1).

3. Method as defined by any of claims 1 or 2, characterized in that the second element (2) comprises a junction surface (4) imbued with a polyester or vinylester adhesive (5).

4. Method as defined by any of claims 1 or 2, characterized in that the second element (2) comprises a junction surface (4) made of a not entirely crosslinked polyester based resin, such that said resin of the second element (2) itself insures the adhesive function, the adhesion between the second element (2) and the film (6) being obtained by additional crosslinking of said resin of the second element (2).

5. Method as defined by any of the claims 1-4, characterized in that the film (6) comprises a layer of thermoplastic polymer or copolymer.

6. Method as defined by any of the claims 1-5, characterized in that the film (6) comprises a layer of polyethylene or ethylene copolymer and vinyl acetate grafted by action of carboxylic acid, carboxylic acid ester or its anhydride.

7. Method as defined by claim 6, characterized in that the film (6) made of a polyethylene or ethylene copolymer and grafted vinyl acetate layer is heat pressed by calendaring or pressing against a first element (1) whose junction surface (3) is constituted by one of the following materials: (polyamide, non-processed polyethylene, polyethylene terephthalate, polybutadiene terephthalate, polypropylene or processed aluminum.

8. Method as defined by any of claims 1-5, characterized in that the film (6) comprises a layer made of polyurethane.

9. Method as defined by claim 8, characterized in that the film (6) with the polyurethane layer is heat pressed by calendaring or pressing against the first element (1) whose junction surface (3) is constituted by one of the following materials: thermohardenable polyurethane, a not completely crosslinked epoxy material, a not entirely crosslinked polyester.

10. Method as defined by any of claims 1-5, characterized in that the film (6) comprises an ionomer layer.

11. Method as defined by claim 10, characterized in that the film with the ionomer layer (6) is heat pressed by calendaring or pressing against the first element (1) whose junction surface (3) is constituted of one of the following materials: non-processed polyethylene, steel, aluminum alloy or processed aluminum.

12. Method as defined by any of claims 1-5, characterized in that the film (6) comprises a layer made of ABS (Acrylonitrile Butadiene Styrene).

13. Method as defined by claim 12, characterized in that the film having an ABS layer (6) is heat pressed by calendaring or pressing against a first element (1) whose junction surface (3) is constituted by one of the following materials: not entirely crosslinked epoxy material, or a not entirely crosslinked polyester.

14. Method as defined by any of claims 1-13, characterized in that the film (6) is of a single layer type.

15. Method as defined by any of claims 1-13, characterized in that the film (6) is of the multi-layer type, comprising at least one first layer (61) forming a compatible adhesive surface with the adhesive (5) and a second layer (62) forming a compatible assembly surface with the first element (1).

16. Composite ski structure obtained by the method per any of claims 1-15, comprising at least a first (1) and a second (2) elements affixed to one another by an adhesive (5) made of polyester or vinyl ester, located between the junction surfaces (3,4) of said elements, wherein a polymer film (6) is located between the adhesive (5) and the fist element (1), said film (6) whose connection with the first element (1) is ensured by a chemical, or physico-chemical connection or by mechanical anchoring, or by interdiffusion of the polymer chains, or by welding, enabling affixing by adhesion of elements (1,2) with respect to one another.

17. Ski as defined by claim 16, characterized in that the polymer film (6) is thermoplastic.

18. Ski as defined by claim 17, characterized in that the polymer film (6) comprises at least one layer constituted one of the following materials: polyethylene grafted by carboxylic acid, carboxylic acid ester or its anhydride, polyurethane, ionomer, ABS (Acrylonitrile Butadiene Styrene).

## Patentansprüche

1. Verfahren Herstellung eines Ski mit zusammengesetztem Aufbau, das einen Schritt des Zusammenfügens von zumindest einem ersten (1) und einem zweiten (2) Element durch Wirkung einer Polyester- oder Vinylester-Klebstoffschicht (5) zwischen den Verbindungsoberflächen (3, 4) der Elemente aufweist, wobei man zwischen die Klebstoffschicht (5) und die Verbindungsoberfläche (3) des ersten Elementes (1) eine Schicht (6) in festem Zustand einfügt, die zumindest eine Schicht basierend auf Polymeren aufweist, die die Haftung des Klebstoffes (5) auf der Gesamtheit, die durch das Element (1) und die Schicht (6) gebildet ist, erlaubt, deren Zusammenfügen außerdem durch eine chemische oder physiko-chemische Verbindung, oder durch mechanische Verankerung, oder durch Interdiffusion der Polymerketten, oder durch Verschweißen versichert ist.

2. Verfahren gemäß Anspruch 1, dadurch gekennzeichnet, daß:
- Die Schicht (6) eine Klebefläche aus einem Material aufweist, so daß der Klebstoff (5) ein gutes Haftvermögen auf der Schicht (6) zeigt,
- die Schicht (6) eine Zusammenfügfläche aus einem Material aufweist, die ihre feste Verbindung mit der Verbindungsoberfläche (3) des ersten Elementes (1) erlaubt.

3. Verfahren gemäß einem der Ansprüche 1 oder 2, dadurch gekennzeichnet, daß das zweite Element (2) eine Verbindungsoberfläche (4) aufweist, die mit einem Polyester- oder Vinylester-Klebstoff (5) getränkt ist.

4. Verfahren gemäß einem der Ansprüche 1 oder 2, dadurch gekennzeichnet, daß das zweite Element (2) eine Verbindungsoberfläche (4), basierend auf nicht vollständig vernetztem Polyesterharz aufweist, so daß das Harz des zweiten Elementes (2) selbst die Klebefunktion gewährleistet, wobei die Haftung zwischen dem zweiten Element (2) und der Schicht (6) durch Vervollständigung der Vernetzung des Harzes des zweiten Elementes (2) erhalten wird.

5. Verfahren gemäß einem der Ansprüche 1 bis 4, dadurch gekennzeichnet, daß die Schicht (6) eine Schicht aufweist, die aus einem Polymer oder einem thermoplastischem Copolymer ist.

6. Verfahren gemäß einem der Ansprüche 1 bis 5, dadurch gekennzeichnet, daß die Schicht (6) eine Schicht aufweist, die aus Polyetkylen oder einem Copolymer von Ethylen und Vinylacetat, veredelt durch Carbonsäurewirkung, Carbonsäureester oder seinem Anhydrid besteht.

7. Verfahren gemäß Anspruch 6, dadurch gekennzeichnet, daß die Schicht (6) aus einer Schicht von Polyethylen oder einem Copolymer von Ethylen und einem veredelten Vinylacetat durch Kalandrieren oder Pressen gegen ein erstes Element (1) heißplattiert ist, dessen Verbindungsoberfläche (3) aus einem der Materialien gebildet ist: Polyamid, nicht behandeltes Polyethylen, Polyethylenterephtalat, Polybutadienterephtalat, Polypropylen, oder behandeltem Aluminium.

8. Verfahren gemäß einem der Ansprüche 1 bis 5, dadurch gekennzeichnet, daß die Schicht (6) eine Schicht aus Polyuretan aufweist.

9. Verfahren gemäß Anspruch 8, dadurch gekennzeichnet, daß die Schicht (6) aus einer Polyuretanschicht durch Kalandrieren oder Pressen gegen ein erstes Element (1) heißplattiert ist, dessen Verbindungsoberfläche (3) aus einem der Materialien gebildet ist: Wärmehärtbarem Polyuretan, nicht vollständig vernetztem Epoxydmaterial, nicht vollständig vernetztem Polyester.

10. Verfahren gemäß einem der Ansprüche 1 bis 5, dadurch gekennzeichnet, daß die Schicht (6) eine Schicht aus einem Ionomer umfaßt.

11. Verfahren gemäß Anspruch 10, dadurch gekennzeichnet, daß die Schicht aus einer Ionomerschicht (6) durch Kalandrieren oder Pressen gegen ein erstes Element (1) heißplattiert ist, dessen Verbindungsoberfläche (3) aus einem der Materialien gebildet ist: Nicht behandeltem Polyethylen, Stahl, einer Aluminiumlegierung oder behandeltem Aluminium.

12. Verfahren gemäß einem der Ansprüche 1 bis 5, dadurch gekennzeichnet, daß die Schicht (6) eine Schicht aus ABS (Acrylnitril-Butadien-Styrol) umfaßt.

13. Verfahren gemäß Anspruch 12, dadurch gekennzeichnet, daß die Schicht aus einer ABS-Schicht (6) durch Kalandrieren oder Pressen gegen ein erstes Element (1) heißplattiert ist, dessen Verbindungsoberfläche (3) aus einem der Materialien gebildet ist: Nicht vollständig vernetztem Epoxydmaterial, oder nicht vollständig vernetztem Polyester.

14. Verfahren gemäß einem der Ansprüche 1 bis 13, dadurch gekennzeichnet, daß die Schicht (6) vom Einschicht-Typ ist.

15. Verfahren gemäß einem der Ansprüche 1 bis 13, dadurch gekennzeichnet, daß die Schicht (6) vom Vielschicht-Typ ist, der zumindest eine erste Schicht (61), die eine Klebefläche bildet, die verträglich mit dem Klebstoff (5) ist, und eine zweite Schicht (62), die eine Zusammenfügschicht bildet, die verträglich mit dem ersten Element (1) ist, aufweist.

16. Ski mit einem zusammengesetztem Aufbau, der durch das Verfahren gemäß einem der Ansprüche 1 bis 15 erhalten wird, der zumindest ein erstes (1) und ein zweites (2) Element aufweist, wobei das eine mit dem anderen durch einen Polyester- oder Vinylester-Klebstoff (5) verbunden ist, der zwischen den Verbindungsoberflächen (3, 4) der Elemente angeordnet ist, wobei eine Polymerschicht (6) zwischen dem Klebstoff (5) und dem ersten Element (1) angeordnet ist, wobei die Schicht (6), deren Verbindung mit dem ersten Element (1) durch eine chemische oder physiko-chemische Verbindung, oder durch mechanische Vorankerung oder durch Interdiffusion der Polymerketten, oder durch Verschweißen gewährleistet ist, die Verbindung der Elemente (1, 2) durch Kleben miteinander erlaubt.

17. Ski gemäß Anspruch 16, dadurch gekennzeichnet, daß die Polymerschicht (6) thermoplastisch ist.

18. Ski gemäß Anspruch 17, dadurch gekennzeichnet, daß die Polymerschicht (6) zumindest eine Schicht umfaßt, die aus einem der Materialien gebildet ist: Polyethylen, veredelt durch Carbonsäure, Carbonsäureester oder sein Anhydrid, Polyuretan, Ionomer, ABS (Acrylnitril-Butadien-Styrol).
